# EUROPEAN PATENT SPECIFICATION

(11) **EP 2 279 971 B1**
(45) Date of publication and mention of the grant of the patent: **23.05.2012**
(21) Application number: 10167782.1
(22) Date of filing: 29.06.2010
(51) Int. Cl.: B65G 47/08, B65G 47/244

(54) **Apparatus, system and method for handling a package**
Vorrichtung, System und Verfahren zur Handhabung eines Pakets
Appareil, système et procédé de manipulation d'un paquet

(30) Priority: 29.07.2009 IT PR20090059
(43) Date of publication of application: 02.02.2011
(73) Proprietor: Gea Procomac S.p.A., 43038 Sala Baganza (PR) (IT)
(72) Inventor: Lanzi, Mauro, 43030, BASILICANOVA (IT)
(74) Representative: Gotra, Stefano

(56) References cited:
- EP-A1- 1 992 579
- EP-A2- 1 767 474
- WO-A1-99/50161
- US-A1- 2003 010 603

## Description

The present invention has as its subject an apparatus, a system and a method for handling a package. In particular, the apparatus, the system and the method proposed are used for forming partial layers of packaged lots (or packs) before stacking them on a pallet.

Generally, to simplify transport operations, products packaged individually are later grouped together and packaged in packages having easily manoeuvrable shapes which are such as to optimise the occupation of space. A classic example of "primary" and "secondary" packaging is found in the distribution of drinks, which are first packaged in bottles (or cans) and later packaged in packages comprising a predetermined number of bottles (or cans), typically six, twelve or twenty-four. The packages obtained are handled and oriented in such a way as to form layers, which are transferred to a pallet and stacked one on top of the other.

In currently known palletising systems, the packages, coming from a feeder unit, undergo various operations, such as selection, dividing, positioning and/or orienting according to predetermined layouts, grouping in layers and stacking of the layers themselves. For example, patent document EP1046598 shows an apparatus according to the preamble of claim 1, comprising a feeder station for packages and a distribution and alignment station for dividing and orienting the packages. In particular, the distribution station comprises a table provided with a conveyor belt occupying approximately the entire width of the table. The conveyor belt forms linear, parallel units oriented diagonally with respect to the width of the table. Above each linear unit at least one movable gripper is provided, capable of gripping a package and having a speed adapted to the speed of the conveyor belt in such a way that the packages are movable through an angle of about 90° with respect to the transport direction of the belt itself.

The principal disadvantage of the solution described above is connected with the use of a Cartesian handler which is capable of moving packages only linearly. Besides being complex and costly, because it requires the management of movement along three axes (X, Y, Z), this system lacks versatility.

Document WO99/50161 discloses quite a bulky device for moving boxes thanks to a combination of two linear orthogonal movements and one rotational movement.

On the other side, it is also known an apparatus for displacing objects along a circular path (EP1992579).

A further disadvantage of the aforementioned solution is connected with the considerable bulk of the handler. In fact, the arms of the Cartesian handler are very long, extending in space in such a way as to cover the entire table. This bulk seems, among other things, unjustified because the packages are moved only in a central predefined portion of the table and never cross other zones (for example lateral zones of the table). In this context, the technical task at the base of the present invention is to propose an apparatus, a system and a method for handling a package, which will overcome the above-mentioned drawbacks of the prior art.

In particular, it is an object of the present invention to make available an apparatus and a system for handling a package, which will be simple to construct, compact and inexpensive.

It is furthermore an object of the present invention to make available an apparatus, a system and a method for handling a package more quickly than known solutions. The declared technical task and the specified objects are substantially achieved by an apparatus, a system and a method for handling a package, comprising the technical characteristics set forth in one or more of the attached claims.

Additional characteristics and advantages of the present invention will become more readily apparent from the indicative, and hence non-limiting, description of a preferred but not exclusive embodiment of an apparatus, a system and a method for handling a package, as illustrated in the accompanying drawings in which:

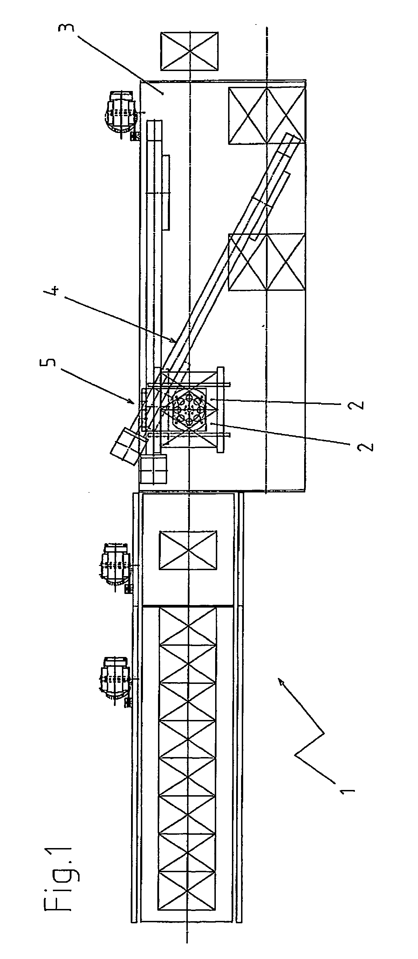

- figures 1 and 3b show an apparatus for handling a package, which is not part of the present invention, seen from above;
- figures 2a-2b illustrate the apparatus of figure 1, in a different embodiment (with auxiliary arm), seen from above, in two different operative conditions;
- figures 2c-2e illustrate the apparatus of figures 2a-2b, in lateral sectional view, with gripper in three different positions;
- figures 3a, 3c and 3d illustrate a system of apparatuses for handling a package, according to the present invention, seen from above, respectively in series, parallel and staggered configuration.

With reference to the figures, number 1 indicates a linear apparatus for handling a package 2, bringing it from an initial configuration to a final configuration on a resting surface 3. This package 2, obtained by packaging a predetermined number of individually pre-packaged articles, has substantially the shape of a parallelepiped. It is well-known that the term 'linear apparatus' denotes an apparatus in which the advancement of the objects takes place substantially in a straight line, unlike rotary apparatuses in which the advancement of the objects takes place in a circular direction.

The apparatus 1 comprises a main arm 4 and a pick-up tool 5 for the package 2 (or for a plurality of packages 2 simultaneously). In particular, the main arm 4 is parallel to the resting surface 3, while the pick-up tool 5 is slidably mounted on the main arm 4. In addition, the pick-up tool 5 is rotatable around a first rotation axis 6 perpendicular to the resting surface 3. Preferably, the pick-up tool 5 consists of a gripper, supported by a carriage 15 slidable on a guide (not illustrated) having extension along the main arm 4.

The main arm 4 is rotatable around a second rotation axis 7 perpendicular to the resting surface 3. The apparatus 1 is provided with an auxiliary arm 8 fixed and parallel to the resting surface 3. The main arm 4 has a first end 4a connected to the auxiliary arm 8 and slidable along the latter between a first and a second limit position as a result of the rotation of the main arm 4 around the second axis 7. For example, this first end 4a of the main arm 4 carries a slider (not illustrated), slidably mounted on a guide having extension along the auxiliary arm 8. A second end 4b of the main arm 4, opposite to said first end 4a, is however pivoted at the second rotation axis 7.

The main arm 4 and the auxiliary arm 8 form a predefined angle α having an amplitude between a minimum value and a maximum value. Preferably, the maximum amplitude of the predefined angle α is about 90°, corresponding to the first limit position of the first end 4a of the main arm 4. The minimum amplitude of the predefined angle α is about 65°, corresponding to the second limit position of the first end 4a of the main arm 4.

The main arm 4 has a maximum length of 1500 mm, while the auxiliary arm 8 has a maximum length of 800 mm. Preferably, the main arm 4 has a length of 1100 mm, while the auxiliary arm 8 has a length of 600 mm. Preferably, the distance, on the auxiliary arm 8, between the first and the second limit position of the first end 4a of the main arm 4 is 450 mm. The first rotation axis 6 (of the pick-up tool 5) and the second rotation axis 7 (of the main arm 4) are parallel.

Preferably, with said first end 4a of the main arm 4 in the first limit position, the main arm 4 and the auxiliary arm 8 respectively extend along an abscissa axis X and along an ordinate axis Y of a two-dimensional X, Y Cartesian reference system.

The apparatus 1 comprises means 10 for driving the rotation of the pick-up tool 5 through an angle identical or complementary to said predefined angle α so that in the final configuration the package 2 rests on the surface 3 with a base 2a in such a way that two sides of the base 2a are parallel to the projection of the abscissa axis X over the resting surface 3 and two sides of the base 2a are parallel to the projection of the ordinate axis Y over this resting surface 3.

The drive means 10 are also operatively active on the gripper 5 to bring two articulated arms 5a, 5b of the gripper 5 from an engagement configuration in which they clamp the package (or packages) 2, to a disengagement configuration in which they withdraw from the package (or packages) 2 to release it (or them) on the resting surface 3. These drive means 10 are of pneumatic or motorised type.

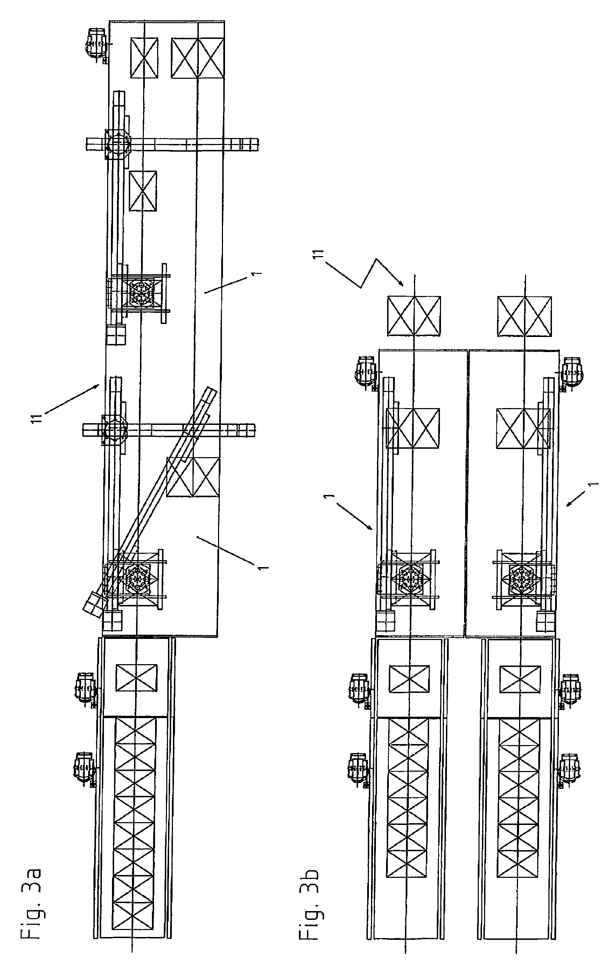

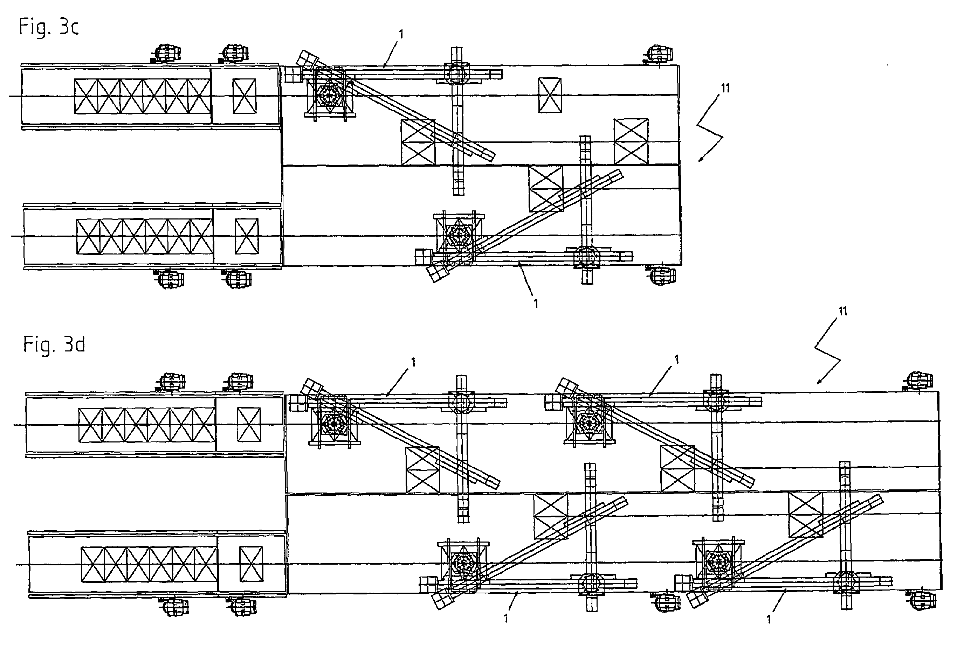

With reference to the drawings, number 11 indicates a system for handling a package 2 comprising a plurality of handling apparatuses 1. In particular, these apparatuses 1 are arranged in series configuration (figure 3a), or in parallel configuration (figure 3b), or in staggered configuration (figures 3c-3d).

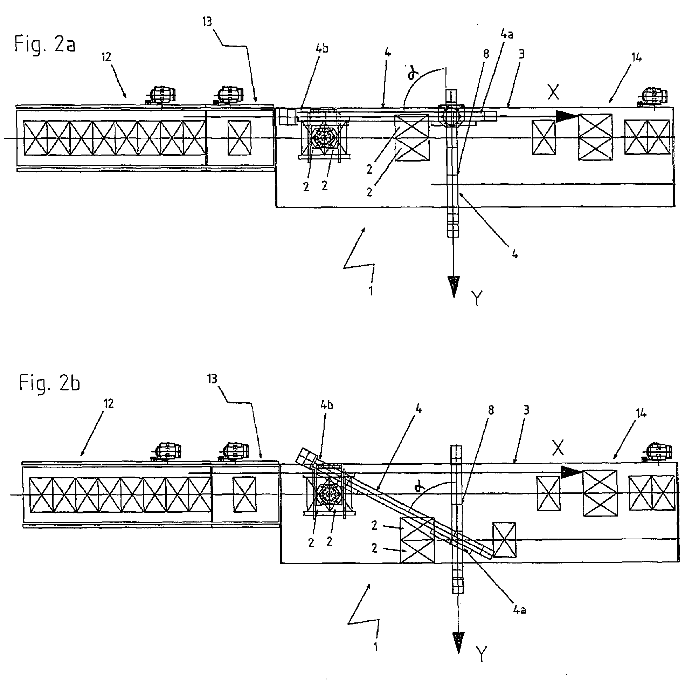

The operation of the apparatus for handling a package, according to the present invention, is described below. Initially, the predefined angle α between the main arm 4 and the auxiliary arm 8 is about 90°, i.e. the first end 4a of the main arm 4 is in the first limit position (see figure 2a). The gripper 5 is at the second end 4b of the main arm 4. The articulated arms 5a, 5b of the gripper 5 are in the disengagement configuration, i.e. they are at a distance from the resting surface 3 such that they do not interfere with the packages 2 below. The packages 2, coming from a feeder unit 12, arrive in proximity to a selection unit 13 which determines the number of packages 2 which must be simultaneously moved by the gripper 5.

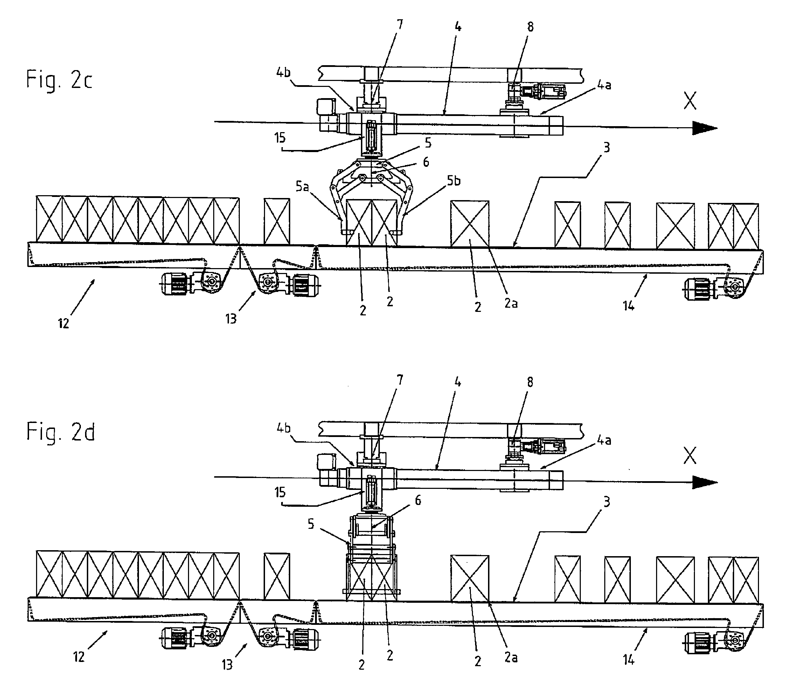

Having reached the resting surface 3, the selected packages 2 are arranged below the gripper 5 in such a way as to assume the initial configuration, i.e. with two sides of their resting base 2a parallel to the projection of the abscissa axis X and with two sides of this base 2a parallel to the projection of the ordinate axis Y. The gripper 5 is brought closer to the resting surface 3 in such a way that its articulated arms 5a, 5b clamp the selected packages 2 (see figures 2c and 2d). In the embodiment described and illustrated here, the movement of the packages 2 over the resting surface 3 takes place by sliding. Alternatively, the articulated arms 5a, 5b, in the configuration of engagement with the packages 2, are raised with respect to the resting surface 3 so that the packages 2 are suspended in the air.

The main arm 4 is rotated around the second rotation axis 7 and, simultaneously, its first end 4a is made to run along the auxiliary arm 8 in such a way as to be brought to an intermediate position between the first and the second limit position (see figure 2b). This intermediate position corresponds to a predefined angle a of amplitude intermediate between 65° and 90°. Simultaneously, the pick-up tool 5 runs along the main arm 4 from the second end 4b towards the first end 4a. In this way, the packages 2 modify their spatial orientation.

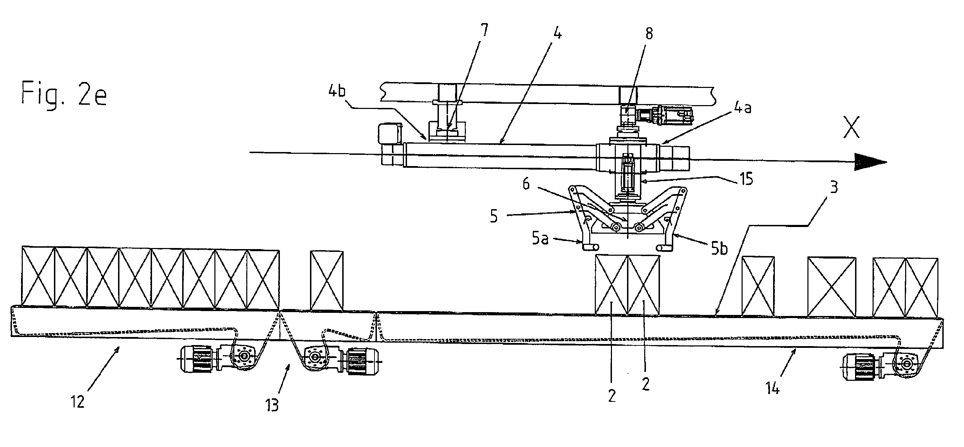

The drive means 10 bring about the rotation of the gripper 5 around the first axis 6 through an angle having an amplitude complementary to the intermediate amplitude of the predefined angle α. In this way, the packages 2 assume once again the initial spatial orientation, i.e. with two sides of their base 2a parallel to the projection of the abscissa axis X and two sides of this base 2a parallel to the projection of the ordinate axis Y. The packages 2 thus come to be in the final configuration on the resting surface 3. The articulated arms 5a, 5b therefore return to the disengagement configuration, i.e. they are at a distance from the resting surface 3 such that they do not interfere with the packages 2 below, as shown in figure 2e.

Alternatively, the drive means 10 bring about the rotation of the gripper 5 through an angle having an amplitude identical to the intermediate amplitude of the predefined angle α. In this case, the final orientation of the packages 2 undergoes a rotation through 90°. In this case too, however, two sides of their base 2a end up parallel to the projection of the abscissa axis X and two sides of this base 2a end up parallel to the projection of the ordinate axis Y.

The sliding of the pick-up tool 5, the rotation of this tool 5 and the rotation of the main arm 4 can occur simultaneously.

Once repositioned on the resting surface 3, the packages 2 are sent to a unit 14 for forming the layer. The operation of the system for handling a package, according to the present invention, is described below. In the case of apparatuses 1 arranged in series configuration, the packages 2 are moved "in cascade", i.e. one after the other, by the various apparatuses 1 constituting the series.

In the case of apparatuses 1 arranged in parallel configuration, the packages 2 are divided into as many lines as there are apparatuses 1 in parallel. Each apparatus 1 is provided with the relative feeder unit 12 and the relative selection unit 13. Each apparatus 1 is operatively active to move the corresponding packages 2, and is, moment by moment, at the same stage of work as the other apparatuses 1 in the system 11.

In the case of apparatuses 1 arranged in staggered configuration, the spatial arrangement is similar to that of the parallel configuration. Some apparatuses 1, however, may be found to be at different stages of work from the other apparatuses 1 in the system 11.

The characteristics of the apparatus, system and method for handling a package, according to the present invention, are clear from the description given above, as also are the advantages.

In particular, thanks to the fact that the main arm can rotate around an axis perpendicular to the resting surface, the proposed apparatus is compact and able to handle the packages quickly. In fact, the apparatus is able to move the packages on the surface by means of the combination of a linear movement and a polar movement, avoiding recourse to the classic Cartesian system. The proposed apparatus is therefore simple to construct, inexpensive and versatile.

Furthermore, the auxiliary arm allows the rotation of the main arm and confers on the apparatus the rigidity necessary for the correct handling of the packages, avoiding flexing of the main arm.

Furthermore, the extension of the arms in length and the excursions of the predefined angle form a limited work area compared with the dimensions of the resting surface, allowing a further reduction in the bulk of the apparatus compared with the known solutions.

Also, by disabling the rotation of the main axis, it is possible to move the packages linearly only, or rotating them through 90° at most. In this case, the proposed apparatus is transformed into a traditional apparatus with single-axis movement.

Furthermore, thanks to the compensation created by the drive means, the packages exit with a spatial orientation such as to enable mutual alignment aimed at minimising the space occupied.

In addition, by combining various apparatuses together, it is possible to increase the speed (series configuration) or the productivity (parallel or staggered configuration).

## Claims

1. Linear apparatus (1) for handling a package (2) of substantially parallelepiped shape obtained by packaging a predetermined number of individually pre-packaged items, said package (2) being brought from an initial configuration to a final configuration on a resting surface (3), comprising:
a main arm (4) parallel to said resting surface (3);
a pick-up tool (5) for the package (2), slidingly mounted on said main arm (4) and rotatable around a first rotation axis (6) perpendicular to said resting surface (3),
**characterised in that** said main arm (4) is rotatable around a second rotation axis (7) perpendicular to said resting surface (3) and **in that** the apparatus (1) further comprises a fixed auxiliary arm (8) parallel to said resting surface (3), said main arm (4) having a first end (4a) which is engaged with the auxiliary arm (8) and sliding along the latter between a first and second limit position as a consequence of the rotation of the main arm (4) around said second axis (7).

2. Apparatus (1) according to claim 1, wherein said main arm (4) forms with the auxiliary arm (8) a predefined angle (α) having a maximum amplitude of around 90°, corresponding to the first limit position of said first end (4a), and a minimum amplitude of around 65°, corresponding to the second limit position of said first end (4a).

3. Apparatus (1) according to claim 2, wherein, with said first end (4a) in the first limit position, said main arm (4) and said auxiliary arm (8) respectively extend along an abscissa axis (X) and along an ordinate axis (Y) of a two-dimensional Cartesian reference system (X, Y).

4. Apparatus (1) according to claim 3, further comprising means (10) for driving the rotation of said pick-up tool (5) by an angle identical or complementary to said predefined angle (α), so that in the final configuration the package (2) will rest upon said resting surface (3) with its base (2a) in such a way that two sides of said base (2a) are parallel to the projection of the abscissa axis (X) over the resting surface (3) and two sides of said base (2a) are parallel to the projection of the ordinate axis (Y) over said resting surface (3).

5. System (11) of linear apparatuses (1) for handling a package (2), said apparatuses (1) being of the type described in any of the preceding claims and being disposed in a series configuration, or in a parallel configuration, or in a staggered configuration.

6. Method for linearly handling a package (2) by means of a linear apparatus (1) according to claims 1-4, comprising the following steps:
conveying said package (2) onto the resting surface (3) so that said package (2) is in an initial configuration;
gripping said package (2) by means of the pick-up tool (5) ;
sliding the pick-up tool (5) along the main arm (4) parallel to said resting surface (3);
rotating the pick-up tool (5) around the first rotation axis (6) perpendicular to said resting surface (3); rotating said main arm (4) around the second rotation axis (7) perpendicular to said resting surface (3).

7. Method according to claim 6, **characterised in that** the steps of sliding the pick-up tool (5), rotating the pick-up tool (5) and rotating the main arm (4) take place simultaneously.

## Patentansprüche

1. Lineare Vorrichtung (1) zur Handhabung eines Pakets (2) einer im Wesentlichen parallelepipedförmigen Gestalt, das durch das Verpacken einer festgelegten Anzahl von individuell vorverpackten Artikeln erhalten wurde, wobei das Paket (2) von einer Anfangskonfiguration in eine Endkonfiguration auf einer Ablagefläche (3) gebracht wird, umfassend:
einen Hauptarm (4), der parallel zur Ablagefläche (3) ist;
ein Werkzeug (5) zur Aufnahme des Pakets (2), das verschiebbar auf dem Hauptarm (4) montiert ist und um eine erste Rotationsachse (6), die lotrecht zur Ablagefläche (3) ist, rotierbar ist,
**dadurch gekennzeichnet, dass** der Hauptarm (4) um eine zweite Rotationsachse (7), die lotrecht zur Ablagefläche (3) ist, rotierbar ist, und dass die Vorrichtung (1) ferner einen fixierten Hilfsarm (8) umfasst, der parallel zur Ablagefläche (3) ist, wobei der Hauptarm (4) ein erstes Ende (4a) aufweist, das in den Hilfsarm (8) eingreift und entlang diesem in Folge der Rotation des Hauptarms (4) um die zweite Achse (7) zwischen einer ersten und einer zweiten Grenzposition gleitet.

2. Vorrichtung (1) nach Anspruch 1, wobei der Hauptarm (4) mit dem Hilfsarm (8) einen vordefinierten Winkel (α) bildet, aufweisend eine Maximalweite von ca. 90°, was der ersten Grenzposition des ersten Endes (4a) entspricht, und eine Minimalweite von ca. 65°, was der zweiten Grenzposition des ersten Endes (4a) entspricht.

3. Vorrichtung (1) nach Anspruch 2, wobei sich der Hauptarm (4), mit dem ersten Ende (4a) in der ersten Grenzposition, und der Hilfsarm (8) jeweils entlang einer Abszissenachse (X) und entlang einer Ordinatenachse (Y) eines zweidimensionalen Kartesischen Referenzsystems (X, Y) erstrecken.

4. Vorrichtung (1) nach Anspruch 3, ferner umfassend Mittel (10) zum Antrieb der Rotation des Aufnahmewerkzeugs (5) um einen Winkel, der identisch oder komplementär zum festgelegten Winkel (α) ist, sodass das Paket (2) in der Endkonfiguration so mit seiner Basis (2a) auf der Ablagefläche (3) liegt, dass zwei Seiten der Basis (2a) parallel zur Projektion der Abszissenachse (X) auf der Ablagefläche (3) und zwei Seiten der Basis (2a) parallel zur Projektion der Ordinatenachse (Y) auf der Ablagefläche (3) sind.

5. System (11) linearer Vorrichtungen (1) zur Handhabung eines Pakets (2), wobei die Vorrichtungen (1) des Typs sind, der in einem der vorangehenden Ansprüche beschrieben wurde und in einer Konfiguration in Reihe, einer parallelen Konfiguration oder einer versetzten Konfiguration angeordnet ist.

6. Verfahren zur linearen Handhabung eines Pakets (2) mithilfe einer linearen Vorrichtung (1) nach den Ansprüchen 1 bis 4, umfassend die folgenden Schritte:
Befördern des Pakets (2) auf die Ablagefläche (3), sodass das Paket (2) in einer Anfangskonfiguration ist; Greifen des Pakets (2) mithilfe des Aufnahmewerkzeugs (5);
Gleiten des Aufnahmewerkzeugs (5) entlang dem Hauptarm (4), der parallel zur Ablagefläche (3) ist;
Rotieren des Aufnahmewerkzeugs (5) um die erste Rotationsachse (6), die lotrecht zur Ablagefläche (3) ist;
Rotieren des Hauptarms (4) um die zweite Rotationsachse (7), die lotrecht zur Ablagefläche (3) ist.

7. Verfahren nach Anspruch 6, **dadurch gekennzeichnet, dass** die Schritte des Gleitens des Aufnahmewerkzeugs (5), des Rotierens des Aufnahmewerkzeugs (5) und des Rotierens des Hauptarms (4) simultan stattfinden.

## Revendications

1. Appareil linéaire (1) de manipulation d'un paquet (2) de forme substantiellement parallélépipédique obtenue en emballant un nombre préétabli d'articles individuellement préemballés, ledit paquet (2) étant amené d'une configuration initiale à une configuration finale sur un plan d'appui (3), comprenant:
un bras principal (4) parallèle au dit plan d'appui (3) ;
un doigt ramasseur (5) pour le paquet (2), monté de façon coulissante sur ledit bras principal (4) et pouvant tourner autour d'un premier axe de rotation (6) perpendiculaire au dit plan d'appui (3),
**caractérisé en ce que** ledit bras principal (4) peut tourner autour d'un second axe de rotation (7) perpendiculaire au dit plan d'appui (3) et **en ce que** l'appareil (1) comprenne de plus un bras auxiliaire fixe (8) parallèle au dit plan d'appui (3), ledit bras principal (4) ayant une première extrémité (4a) étant engagée dans le bras auxiliaire (8) et coulissant le long de ce dernier entre une première et une seconde position en butée résultant de la rotation du bras principal (4) autour dudit second axe (7).

2. Appareil (1) selon la revendication 1, dans lequel ledit bras principal (4) forme avec le bras auxiliaire (8) un angle préétabli (α) ayant une amplitude maximale d'environ 90°, correspondant à la première position en butée de ladite première extrémité (4a), et une amplitude minimale d'environ 65°, correspondant à la seconde position en butée de ladite première extrémité (4a).

3. Appareil (1) selon la revendication 2, dans lequel ledit bras principal (4) et ledit bras auxiliaire (8), avec ladite première extrémité (4a) située dans la première position en butée, se développent respectivement le long d'un axe des abscisses (X) et le long d'un axe des ordonnées (Y) d'un système de coordonnées cartésiennes à deux dimensions (X, Y).

4. Appareil (1) selon la revendication 3, comprenant de plus des moyens (10) pour entraîner la rotation dudit doigt ramasseur (5) d'un angle identique ou complémentaire au dit angle préétabli (α), de sorte que dans la configuration finale, le paquet (2) sera posé sur ledit plan d'appui (3) par sa base (2a) de sorte que deux côtés de ladite base (2a) soient parallèles à la projection de l'axe des abscisses (X) sur le plan d'appui (3) et deux côtés de ladite base (2a) soient parallèles à la projection de l'axe des ordonnées (Y) sur ledit plan d'appui (3).

5. Système (11) d'appareils linéaires (1) de manipulation d'un paquet (2), lesdits appareils (1) étant du type décrit selon l'une quelconque des revendications précédentes et étant disposés dans une configuration de séries, ou dans une configuration parallèle ou dans une configuration décalée.

6. Procédé de manipulation d'un paquet de façon linéaire (2) à l'aide d'un appareil linéaire (1) selon les revendications de 1 à 4, comprenant les étapes suivantes:
l'acheminement dudit paquet (2) sur le plan d'appui (3) de sorte que ledit paquet (2) soit dans une configuration initiale;
la prise dudit paquet (2) à l'aide du doigt ramasseur (5) ;
le coulissement du doigt ramasseur (5) le long du bras principal (4) parallèle au dit plan d'appui (3);
la rotation du doigt ramasseur (5) autour du premier axe de rotation (6) perpendiculaire au dit plan d'appui (3) ;
la rotation dudit bras principal (4) autour du second axe de rotation (7) perpendiculaire au dit plan d'appui (3) .

7. Procédé selon la revendication 6, **caractérisé en ce que** les étapes de coulissement du doigt ramasseur (5), de rotation du doigt ramasseur (5) et de rotation du bras principal (4) se déroulent simultanément.
